# EUROPEAN PATENT SPECIFICATION

(11) **EP 1 285 575 B1**
(45) Date of publication and mention of the grant of the patent: **12.10.2005**
(21) Application number: 01306824.2
(22) Date of filing: 09.08.2001
(51) Int. Cl.: A01G 13/02

(54) **A plant cover**
Pflanzendeckel
Couverture de plantes

(43) Date of publication of application: 26.02.2003
(73) Proprietor: Gromax International Ltd, Ipswich IP7 7DS (GB)
(72) Inventor: Crame, Nicholas John, Stowmarket IP14 2HF (GB)
(74) Representative: Simons, Alison

(56) References cited:
- FR-A- 2 254 273
- GB-A- 994 671
- GB-A- 1 018 850
- GB-A- 1 384 872

## Description

The present invention relates to a plant cover for placing over plants to protect them and extends to a method for making such a plant cover. The invention particularly relates to crop covers intended for use to protect crop plants.

A crop cover is designed to protect crop plants in a field from the effects of the weather and also from birds and animals. Crop covers are intended to remain in a field for up to twelve weeks and during this time they may suffer physical damage due to the laying process, birds or animals or by abrasion with the soil or stones.

Once the crop cover is damaged it is vulnerable to tearing in the wind. In some instances the tears may extend until they reach a seam and then rip along the join. Growers may then complain that the fabric is not strong enough or that the seam was not correctly joined and demand a replacement cover.

Such complaints are increasing in number as growers cover larger areas of land and devote less time to maintaining the crop covers. If a tear is repaired soon after it has formed the damage can be limited and further damage may not occur, as the sides of the tear will not be flapping in the wind.

It is known to provide a crop cover with double thickness edges for ease of handling, laying and securing, but the central portion is still vulnerable to tears. Examples of reinforced sheeting which may be used to protect crops are shown in GB 994,671 and FR 2 254 273.

It is an object of the present invention to address some of these issues.

Accordingly the invention provides a plant cover for placement over at least one plant, the cover having a long axis and a short axis, the cover comprising an elongate sheet having two edge portions substantially parallel with the long axis of the cover and a central portion between said edge portions for providing protection to a plant beneath said central portion, the central portion including reinforced regions and being characterised in that at least one reinforced region forms a line of reinforcement that runs transverse to, and oscillates between, the two edge portions.

The plant cover should preferably help to protect the plants from damage by the weather, from either wind, heavy rain or frost and also from animals or birds that may wish to eat the plants.

The plant cover will preferably encourage the growth of the plants that it protects and accordingly the elongate sheet preferably has a high translucence and preferably allows at least 75% of light to pass through and may thermally insulate the medium in which the plants are growing. The elongate sheet is also preferably of lightweight construction so that it does not crush delicate young shoots or new growth. The elongate sheet will preferably be a non-woven fabric and will preferably have a substantially even distribution of fibres. The elongate sheet may also be moisture and gas permeable to aid plant growth.

The edge portions of the elongate sheet of the plant cover will usually be used during the laying of the crop cover and may be used for securing the cover in place once it has been laid.

The plant cover will preferably extend to cover a plurality of plants and a plurality of such covers may be joined together to form a longer or wider cover.

By providing reinforced regions within the area of the central portion, tears and rips within the central portion may extend to reach the reinforced region and be prevented from extending further without passing around reinforced region. The reinforced regions should therefore be regions having a greater tear resistance than the non-reinforced regions of the central portion. It should be understood that the reinforced regions may not completely prevent a tear extending, but should provide a region of increased tear resistance so a greater force is required to propagate a tear through a reinforced region. This should help to prevent tears from propagating through a reinforced region before a grower can spot and repair the damage to the plant cover.

The entire central portion could be reinforced, but this is likely to increase the weight of the cover and may therefore damage delicate plants beneath. By reinforcing only certain regions of the elongate sheet the damage caused by tears is limited and the sheet does not gain a significant amount of weight.

The transversely directed line of reinforcement forms part of a longer reinforcing line that extends for substantially the entire length of the cover. The line of reinforcement oscillates over the central portion of the sheet between the two edge portions. This will provide a plurality of reinforced lines transverse to the edge portions along the length of the cover to help prevent tear growth.

There may be several lines of reinforcement that may cross one another such that areas of the central portion of the elongate sheet are surrounded or enclosed by reinforced regions. By enclosing areas of the central portion within reinforced regions, a tear within the enclosed area is restricted from extending outside the enclosed area and hence the tear is contained.

Enclosed areas within the central portion of the elongate sheet will preferably have an area of between about 2 m² and 40 m². This provides a good compromise between having any damage to the cover contained and preventing the need for many lines of reinforcement tightly packed together which may increase the weight of the cover and possibly decrease some of the desired characteristics such as translucence or insulation.

The edge portions of the plant cover may be reinforced and the reinforced regions within the central portion may be attached to the reinforced edge portions. This allows the reinforced edge portions to be linked to the reinforced regions in the central portion and hence aid in tear resistance.

The reinforced regions may be formed by creating an area of stitching in the central portion. The thread used in the stitching may increase the tear resistance of the central portion helping to prevent a tear propagating through the stitched area. The reinforced regions may also be formed by the addition of a layer of a different material such as a plastics material, a woven or non-woven material or similar.

Preferably the reinforced regions are created by adding an additional layer of the material used to form the elongate sheet. This provides the advantage that the sheet material and therefore the reinforcing material both have the desirable characteristics for a plant cover and the material is already available to the manufacturer.

A second layer of sheet material may be attached to the central portion of the elongate sheet by any suitable means such as glue, or other chemical bonding or the reinforced regions could be integrally formed with the elongate sheet. Preferably however, the reinforced regions are formed by heat bonding the reinforcing material to the elongate sheet in the desired locations.

Accordingly, the invention also provides a method of making a plant cover having a long axis and a short axis, the cover comprising an elongate sheet having two edge portions substantially parallel with the long axis of the cover and a central portion between said edge portions for providing protection to a plant beneath said central portion, the central portion including reinforced regions, the method including the steps of:
a) placing reinforcing material upon the elongate sheet in the desired location to form a sheet assembly;
b) passing the sheet assembly through a heated calender to join the elongate sheet with the reinforcing material;
and the method being characterised in that the reinforcing material is placed upon the elongate sheet such that it forms at least one line of reinforcement that runs transverse to, and oscillates between, the two edge portions of the sheet assembly.

This method provides the advantage that the manufacturer will usually already have such equipment and this method allows quick production of a reinforced elongate sheet from standard elongate sheet producing machinery. This obviously allows the manufacturer to retain lower stock levels of the reinforced elongate sheet because they can be quickly fabricated from an existing standard stock. Once the reinforced sheet has been created any further manufacturing steps required to create the plant cover may be performed.

Preferably the elongate sheet and reinforcing material are both non-woven material.

The production of non-woven materials can be described as taking place in three stages, although modern technology allows an overlapping of the stages, and in some cases all three stages can take place at the same time. The three stages are Web Formation, Web Bonding and Finishing Treatments.

Non-woven manufacture starts by the arrangement of fibres in a sheet or web. The fibres can be staple fibres packed in bales, or filaments extruded from molten polymer granules. Four basic methods are used to form a web, and non-wovens are usually referred to by one of the methods drylaid, spunlaid, wetlaid or other techniques.

Preferably the non-woven material is spunlaid, although other non-woven materials may also be appropriate.

In the spunlaid process polymer granules are melted and molten polymer is extruded through spinnerets. The continuous filaments are cooled and deposited on to a conveyor to form a substantially uniform web. The temperature can cause filaments to adhere to one another, but this cannot be regarded as the principal method of bonding. The spunlaid process (sometimes known as spunbonded) has the advantage of giving non-wovens greater strength.

Webs, other than spunlaid, have little strength in their unbonded form. The web must therefore be consolidated in some way. This is effected by bonding. There are three basic types of bonding chemical, thermal or mechanical.

Preferably the non-woven sheet is bonded using a combination of thermal and mechanical methods often referred to as calendering.

This method uses the thermoplastic properties of certain synthetic fibres to form bonds under controlled heating. In some cases the web fibre itself can be used, but more often a low melt fibre or bicomponent fibre is introduced at the web formation stage to perform the binding function later in the process.

Calendering uses heat and high pressure applied through rollers to fuse the fibre webs together at speed.

At least one of the rollers in the calendering process is preferably textured to include dimples such that the web is not completely fused. The resulting non-woven sheet has a plurality of fused dimples that hold the material together. This allows the insulating properties of the separate fibres to be retained.

Preferably the reinforcing material is a pre-formed non-woven material and this is added to a web prior to calendering. The calendering process will therefore join the two layers together.

The bonded non-woven can then be treated in finishing processes to give the non-woven sheet additional characteristics to make the sheet fire retardant, breathable, porous etc.

Preferably the non-woven sheet is made from polypropylene, but other plastics materials may also be appropriate.

The invention will now be further described, by way of example, with reference to the accompanying drawings, in which:
Figure 1 shows a plant cover in place on a field with a cutaway section showing plants beneath the cover;
Figure 2 shows a plant cover having two crossing reinforcing lines running substantially the entire length enclosing areas of the central portion; and
Figure 3 shows a plant cover having a second pattern of reinforcing lines enclosing areas of the central portion.

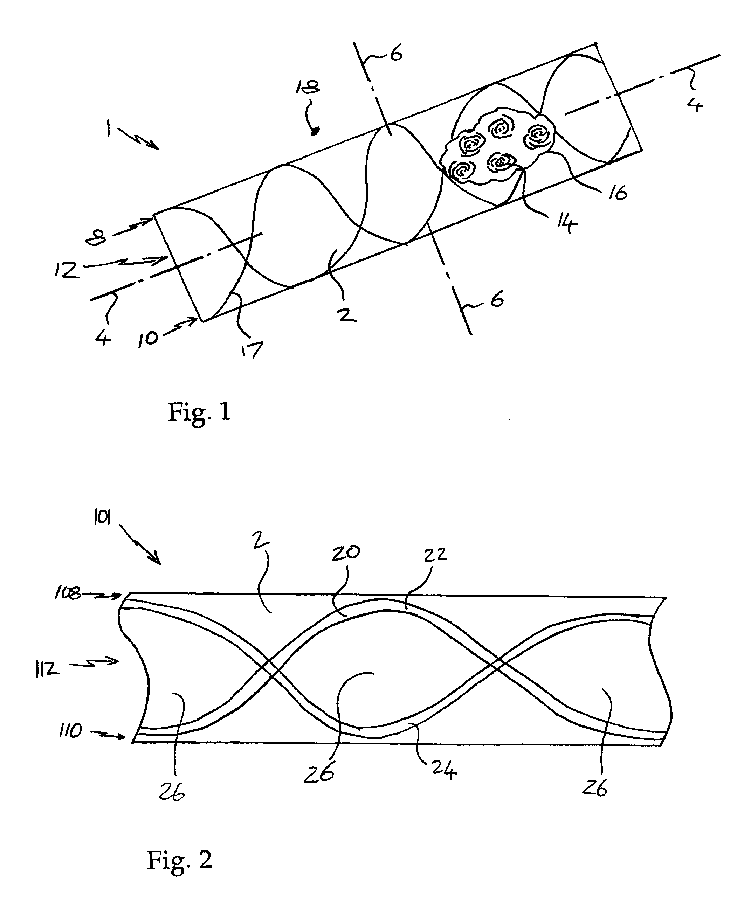

Figure 1 shows a rectangular plant cover 1 comprising an elongate sheet 2 having a long axis 4 and a short axis 6. The elongate sheet 2 has two edge portions 8,10 that run substantially parallel with the long axis 4 along each side of the elongate sheet 2. Between the edge portions there is a central portion 12 beneath which plants 14 may be protected. Plants 14 can be seen beneath the plant cover through cutaway 16. The plant cover 1 includes reinforced regions 17 which will be discussed in greater detail with reference to later embodiments.

In this instance the elongate sheet 2 is formed from a non-woven fabric about 2 m wide along the short axis 6 with a weight of about 17-18 g/m². The elongate sheet 6 may be any length along the long axis 4, but in this case is over 100 m long. The cover 1 has been laid in a field 18 by sheet laying equipment as is known in the art.

Figure 2 shows a plant cover 101 according to the invention having reinforced regions 20 that form lines of reinforcement 22,24 that run the length of the plant cover 101. In this case the two lines of reinforcement 22,24 oscillate between edge portions 108,110. This oscillation causes the lines of reinforcement 22,24 to cross and enclose areas 26 of the central portion 112. If a tear begins in an enclosed area 26, the tear will be contained within that area 26 and damage to the cover 101 will be limited.

In this case the lines of reinforcement 22,24 are made from thin strips of the same material as is used for the elongate sheet 2. That is about 5 cm wide strips of about 17-18 g/m² non-woven material. These strips of material are located on the elongate sheet 2 before the elongate sheet 2 is calendered for the first time. As the elongate sheet is calendered the two layers are heat bonded to one another. It should be understood that the joining of the two layers can occur after the elongate sheet has been calendered and may not involve a calendering process, for instance the two layers could be glued or otherwise bonded together. Thus the reinforced regions become in effect 34-36 g/m² non-woven material, which has an increased tear resistance.

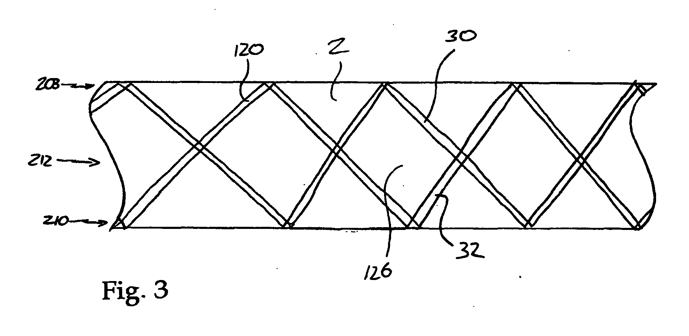

Figure 3 shows a further embodiment of a plant cover 201 according to the invention. Features that are similar to the embodiment 101 will be referenced by similar numerals incremented by 100.

In this embodiment 201, the reinforced regions 120 form diagonal lines of reinforcement 30,32 across the elongate sheet 2. The diagonal lines of reinforcement 30,32 run in opposing directions between the edge portions 208,210 such that the lines 30,32 cross and enclose areas 126 of the central portion 212.

It should be understood that many other patterns of reinforcement may be envisaged to help prevent tears in the plant cover from propagating and causing further damage to the plant cover.

## Claims

1. A plant cover (1) for placement over at least one plant (14), the cover (1) having a long axis (4) and a short axis (6), the cover (1) comprising an elongate sheet (2) having two edge portions (8,10) substantially parallel with the long axis (4) of the cover (1) and a central portion (12) between said edge portions (8,10) for providing protection to a plant (14) beneath said central portion (12), the central portion including reinforced regions (17) and being **characterised in that** at least one reinforced region (20) forms a line of reinforcement (22) that runs transverse to, and oscillates between, the two edge portions (108,110).

2. A plant cover (1) as claimed claim 1, in which there are a plurality of reinforced regions (17) that enclose areas (26) of the central portion (112).

3. A plant cover as claimed claim1 or claim 2, in which the elongate sheet is made from a non-woven fabric.

4. A plant cover as claimed in any preceding claim, in which the edge portions are reinforced.

5. A plant cover as claimed in any preceding claim, in which the reinforced regions are formed by attaching an additional layer of the material used to form the elongate sheet to the elongate sheet in the desired location.

6. A method of making a plant cover (1) having a long axis (4) and a short axis (6), the cover (1) comprising an elongate sheet (2) having two edge portions (8,10) substantially parallel with the long axis (4) of the cover and a central portion (12) between said edge portions (8,10) for providing protection to a plant (14) beneath said central portion, the central portion (12) including reinforced regions (17), the method including the steps of:
a) placing reinforcing material upon the elongate sheet in the desired location to form a sheet assembly;
b) passing the sheet assembly through a heated calender to join the elongate sheet with the reinforcing material;
and the method being **characterised in that** the reinforcing material is placed upon the elongate sheet such that it forms at least one line of reinforcement (22) that runs transverse to, and oscillates between, the two edge portions (108,110) of the sheet assembly.

7. A method as claimed in claim 6, in which the reinforcing material is the same as the sheet material.

8. A method as claimed in claim 6 or claim 7, in which the sheet material is a non woven material.

## Patentansprüche

1. Pflanzenabdeckung (1) zur Plätzierung über mindestens eine Pflanze (14), wobei die Abdeckung (1) eine lange Achse (4) und eine kurze Achse (6) hat und ein längliches Flächengebilde (2) aufweist, das zwei Randabschnitte (8, 10), die im Wesentlichen parallel zur langen Achse (4) der Abdeckung (1) verlaufen, und einen mittleren Abschnitt (12) zwischen den Randabschnitten (8, 10) hat, um eine Pflanze (14) unter dem mittleren Abschnitt (12) zu schützen, wobei der mittlere Abschnitt verstärkte Bereiche (17) aufweist, **dadurch gekennzeichnet, dass** mindestens ein verstärkter Bereich (20) eine Verstärkungslinie (22) bildet, die quer zu den beiden Randabschnitten (108, 110) verläuft und zwischen ihnen hin- und hergeht.

2. Pflanzenabdeckung (1) nach Anspruch 1, wobei mehrere verstärkte Bereiche (17) vorliegen, die Bereiche (26) des mittleren Abschnitts (112) einschließen.

3. Pflanzenabdeckung nach Anspruch 1 oder 2, wobei das längliche Flächengebilde aus einem Vliesstoff hergestellt ist.

4. Pflanzenabdeckung nach einem der vorhergehenden Ansprüche, wobei die Randabschnitte verstärkt sind.

5. Pflanzenabdeckung nach einem der vorhergehenden Ansprüche, wobei die verstärkten Bereiche durch Anbringen einer zusätzlichen Schicht des zur Bildung des länglichen Flächengebildes verwendeten Materials an das längliche Flächengebilde an der gewünschten Stelle gebildet sind.

6. Verfahren zur Herstellung einer Pflanzenabdeckung (1) mit einer langen Achse (4) und einer kurzen Achse (6), wobei die Abdeckung (1) ein längliches Flächengebilde (2) aufweist, das zwei Randabschnitte (8, 10), die im Wesentlichen parallel zur langen Achse (4) der Abdeckung verlaufen, und einen mittleren Abschnitt (12) zwischen den Randabschnitten (8, 10) hat, um eine Pflanze (14) unter dem mittleren Abschnitt (12) zu schützen, wobei der mittlere Abschnitt verstärkte Bereiche (17) aufweist, wobei das Verfahren die folgenden Schritte aufweist:
a) Platzieren von Verstärkungsmaterial auf dem länglichen Flächengebilde an der gewünschten Stelle zur Bildung einer Flächengebildeanordnung;
b) Hindurchführen der Flächengebildeanordnung durch einen beheizten Kalander zur Verbindung des länglichen Flächengebildes mit dem Verstärkungsmaterial;
**dadurch gekennzeichnet, dass** das Verstärkungsmaterial so auf dem länglichen Flächengebilde platziert wird, dass es mindestens eine Verstärkungslinie (22) bildet, die quer zu den beiden Randabschnitten (108, 110) der Flächengebildeanordnung verläuft und zwischen ihnen hin- und hergeht.

7. Verfahren nach Anspruch 6, wobei das Verstärkungsmaterial dasselbe wie das Flächengebildematerial ist.

8. Verfahren nach Anspruch 6 oder 7, wobei das Flächengebildematerial ein Vliesmaterial ist.

## Revendications

1. Couverture de plantes (1) à placer sur au moins une plante (14), la couverture (1) ayant un axe long (4) et un axe court (6), la couverture (1) comprenant une feuille allongée (2) ayant deux portions de bord (8, 10) sensiblement parallèles à l'axe long (4) de la couverture (1) et une portion centrale (12) entre lesdites portions de bord (8, 10) pour assurer une protection de la plante (14) sous ladite portion centrale (12), la portion centrale comprenant des régions renforcées (17) et étant **caractérisée en ce qu'**au moins une région renforcée (20) forme une ligne de renforcement (22) qui passe transversalement aux deux portions de bord (108, 110) et oscille entre elles.

2. Couverture de plantes (1) selon la revendication 1, dans laquelle il y a une pluralité de régions renforcées (17) qui entourent des zones (26) de la portion centrale (112).

3. Couverture de plantes selon la revendication 1 ou 2, dans laquelle la feuille allongée est constituée d'un textile non tissé.

4. Couverture de plantes selon l'une quelconque des revendications précédentes, dans laquelle les portions de bord sont renforcées.

5. Couverture de plantes selon l'une quelconque des revendications précédentes, dans laquelle les régions renforcées sont formées en fixant une couche supplémentaire du matériau utilisé pour former la feuille allongée à l'endroit désiré.

6. Procédé de fabrication d'une couverture de plantes (1) ayant un axe long (4) et un axe court (6), la couverture (1) comprenant une feuille allongée (2) ayant deux portions de bord (8, 10) sensiblement parallèles à l'axe long (4) de la couverture et une portion centrale (12) entre lesdites portions de bord (8, 10) pour assurer une protection d'une plante (14) sous ladite portion centrale, la portion centrale (12) comprenant des régions renforcées (17), le procédé comprenant les étapes consistant à :
a) placer un matériau de renforcement sur la feuille allongée à l'endroit désiré pour former un ensemble de feuille ;
b) faire passer l'ensemble de feuille par une calandre chauffante pour assembler la feuille allongée avec le matériau de renforcement ;
et le procédé étant **caractérisé en ce que** le matériau de renforcement est placé sur la feuille allongée de telle façon qu'il forme au moins une ligne de renforcement (22) qui passe transversalement aux deux portions de bord (108, 110) de l'ensemble de feuille et oscille entre elles

7. Procédé selon la revendication 6, dans lequel le matériau de renforcement est identique au matériau de la feuille.

8. Procédé selon la revendication 6 ou 7, dans lequel le matériau de la feuille est un textile non tissé.
